# EUROPÄISCHE PATENTSCHRIFT

(11) **EP 2 307 710 B1**
(45) Veröffentlichungstag und Bekanntmachung des Hinweises auf die Patenterteilung: **27.03.2013**
(21) Anmeldenummer: 09763852.2
(22) Anmeldetag: 23.11.2009
(51) Int. Cl.: F03B 17/06, H01F 38/14

(54) **UNTERWASSERKRAFTWERK MIT ABKOPPELBARER MASCHINENGONDEL**
UNDERWATER POWER PLANT HAVING REMOVABLE NACELLE
STATION DE PRODUCTION D'ÉLECTRICITÉ SUBMERGÉE ÉQUIPÉE D'UNE NACELLE POUR MACHINES AMOVIBLE

(30) Priorität: 02.12.2008 DE 102008059891
(43) Veröffentlichungstag der Anmeldung: 13.04.2011
(73) Patentinhaber: Voith Patent GmbH, 89522 Heidenheim (DE)
(72) Erfinder: HOLSTEIN, Benjamin, 89520 Heidenheim (DE); PERNER, Norman, 89233 Neu-Ulm (DE); HOFFMANN, Rolf, 89555 Steinheim (DE); LANGE, Andreas, 89551 Zang (DE); HÖLLE, Michael, 89555 Söhnstetten (DE)
(74) Vertreter: Dr. Weitzel & Partner
(86) Internationale Anmeldenummer: PCT/EP2009/008315
(87) Internationale Veröffentlichungsnummer: WO 2010/063385

(56) Entgegenhaltungen:
- WO-A1-02/44558
- WO-A1-98/09303
- WO-A2-2007/125349
- DE-A1-102007 024 528
- US-A- 5 703 461
- US-A1- 2007 141 887
- US-B1- 6 963 263

## Beschreibung

Die Erfindung betrifft ein Unterwasserkraftwerk mit einer abkoppelbaren Maschinengondel gemäß dem Oberbegriff der unabhängigen Ansprüche, insbesondere zur Energiegewinnung aus einer Gezeitenströmung, wie z.B. aus WO 2007/125 349 bekannt.

Unterwasserkraftwerke, die ohne eine Dammstruktur, frei umströmt ausgebildet sind und zur Energiegewinnung aus einer Gezeitenströmung dienen, sind bekannt. Solchermaßen freistehende Anlagen können auch für Fließgewässer verwendet werden. Für derartige Anlagen läuft eine von der Strömung angetriebene Wasserturbine an der Maschinengondel um und treibt wenigstens mittelbar einen innerhalb der Maschinengondel untergebrachten elektrischen Generator an. Die Maschinengondel wird von einer Tragstruktur gehaltert, die entweder als auf dem Gewässergrund fundamentiert oder als schwimmfähige Einheit ausgebildet werden kann. Die Halterung der Maschinengondel an der Tragstruktur kann starr ausgebildet sein. Alternativ ist die Maschinengondel derart drehbar an der Tragstruktur befestigt, dass eine Nachführung der Wasserturbine im Fall einer variierenden Anströmungsrichtung möglich ist.

Zur Ausführung eines Anlagenservices und zur Vereinfachung der Montage wurde beispielsweise durch die EP 1 366 287 A1 ein modular aufgebautes Unterwasserkraftwerk vorgeschlagen. Dabei wird zunächst aus Einzelkomponenten ein Fundament auf dem Gewässergrund mit einer darauf aufbauenden Tragstruktur errichtet. Nachfolgend wird die Maschinengondel entlang einer Führungsseilanordnung auf die Tragstruktur abgesenkt. Dabei wird ein vom elektrischen Generator beziehungsweise den leistungselektronischen Komponenten in der Maschinengondel ausgehendes Verbindungskabel von Servicetauchern in eine Führungsrinne an der Tragstruktur abgelegt. Diese Art der Montage ist aufwendig und aufgrund des Servicetauchereinsatzes gefährlich. Entsprechend schwierig gestaltet sich ein erneutes Anheben der Maschinengondel zur Ausführung eines Anlagenservices über Wasser.

Zur Vereinfachung der Kabelführung wurde durch die GB 2 437 534 A für ein modulares Unterwasserkraftwerk vorgeschlagen, an der Maschinengondel einen starren Rohrstutzen zu verwenden, der ein erstes Teilstück des Verbindungskabels aufnimmt und schützt. Nachteilig an einer derartigen Gestaltung ist der konstruktive Aufwand zur Ausbildung des Stutzens. Darüber hinaus ist dieses Anlagenteil bei der Handhabung der Maschinengondel störend. Dies betrifft die Erstmontage sowie Wartungsarbeiten, die an Bord eines Wasserfahrzeugs ausgeführt werden. Für diesen Fall wird der vom Gehäuse der Maschinengondel abstehende Stutzen ein entsprechend groß dimensioniertes Kran- und Handhabungssystem an Bord des Wasserfahrzeugs nach sich ziehen.

Ein nach der Anlageninstallation außenliegendes Verbindungskabel stellt aufgrund der ständigen Bewegung durch die Umgebungsströmung eine verschleißanfällige Komponente dar. Diese Ermüdungsproblematik kann auch durch segmentweise angebrachte Komponenten eines Kabelschutzsystems nicht gänzlich überwunden werden. Darüber hinaus kann das in Strömung befindliche Kabel zu Vibrationen führen. Ferner ist eine Befestigung an der Tragstruktur vorzusehen, die beim Betrieb einen hinreichenden Abstand vom Flugkreis der Wasserturbine sicherstellt. Diese ist aufwendig.

Eine weitere Problematik der bekannten, modularen Unterwasserkraftwerke ergibt sich bei einer drehbaren Anlenkung der Maschinengondel an die Tragstruktur zur Nachführung der Wasserturbine gegenüber einer richtungsvariablen Anströmung. Für diesen Fall ist eine zu starke Verdrillung des von der Maschinengondel ausgehenden Verbindungskabels zu vermeiden. Für aktive motorisch betriebene Azimut-Drehvorrichtungen kann zur Umgehung dieser Problematik ein ständiger Wechsel der Drehrichtung, im einfachsten Fall eine Vor- und Zurückbewegung, ausgeführt werden. Zur Vereinfachung des Systems werden jedoch passive Azimut-Drehvorrichtungen bevorzugt. Zur Vermeidung der Verdrillung für eine derartige Einrichtung wurde durch die DE 10 2007 002 338 B3 vorgeschlagen, die Azimut-Drehung mit der Eigendrehung eines zentral verlaufenden Verbindungskabels zu synchronisieren. Dieses ist jedoch mit einem zusätzlichen konstruktiven Aufwand zur Kopplung der Drehbewegungen der Maschinengondel und des Verbindungskabels verbunden.

Der Erfindung liegt die Aufgabe zugrunde, ein modulares Unterwasserkraftwerk mit einer lösbar an einer Tragstruktur befestigten Maschinengondel anzugeben, dessen Kopplung und Abkopplung vereinfacht ist. Dabei soll insbesondere das Verbindungskabel zur Übertragung der vom elektrischen Generator in der Maschinengondel erzeugten elektrischen Leistung bei Montage und Demontage sowie beim normalen Anlagenbetrieb sicher geschützt sein. Für eine Weitergestaltung soll die Maschinengondel im gekoppelten Zustand eine Drehung um die Tragstruktur ausführen können, um einer Richtungsänderung für die Anströmung folgen zu können, ohne dass eine Kabelverdrillung auftreten kann.

Zur Lösung der Aufgabe haben die Erfinder erkannt, dass ein modulares Unterwasserkraftwerk die vom elektrischen Generator in der Maschinengondel erzeugte elektrische Leistung induktiv und demnach berührungslos zur Tragstruktur übertragen sollte. Hierzu kann eine induktive Übertragungseinrichtung zwischen der Maschinengondel und der Wasserturbine vorgesehen sein, die lösbar ist und somit ein An- und Abkoppeln der Maschinengondel an der Tragstruktur erlaubt. Dabei kann die induktive Übertragungseinrichtung für eine erste Gestaltung von einem Transformator ausgeführt werden. Im Fall einer richtungsstarren Ankopplung des Unterwasserkraftwerks an die Tragstruktur kann ein Transformator verwendet werden, dessen Primärseite der Maschinengondel und dessen Sekundärseite der Tragstruktur zugeordnet ist. Denkbar ist die Verwendung einer Vielzahl solcher Transformatoren, die als Teil oder im Bereich der Kopplungsvorrichtung zur Verbindung der Maschinengondel mit der Tragstruktur ausgebildet sein können.

Zur Ausführung eines Unterwasserkraftwerks mit einer drehbar an der Tragstruktur angelenkten Maschinengondel ist die erfindungsgemäße induktive Übertragungsvorrichtung ebenfalls mit drehbar zueinander beweglichen Teilen ausgestaltet. Eine bevorzugte Ausgestaltung ist die Verwendung eines Drehtransformators, der als elektrischer Generator, beispielsweise als Asynchronmaschine mit einem gewickelten Läufer, ausgebildet ist, welcher festgebremst wird. Besonders bevorzugt ist eine Induktionsmaschine mit Läuferspeisung zur Realisierung des Drehtransformators.

Eine alternative Ausgestaltung der Erfindung sieht vor, den elektrischen Generator, der im Betrieb wenigstens mittelbar von der Wasserturbine angetrieben wird, teilbar auszubilden und auf eine separate induktive Übertragungsvorrichtung zu verzichten. Dabei ist der Läufer des elektrischen Generators 6 der Maschinengondel 2 zugeordnet und der Stator des elektrischen Generators 6 der Tragstruktur. Demnach wird der elektrische Generator teilbar ausgeführt und kann entsprechend den beiden Hälften der Kopplungsvorrichtung zugeordnet werden. Eine Trennung bzw. die Verbindung der beiden Teile kann im getauchten Zustand erfolgen.

Zur Montage wird zunächst die Tragstruktur mit dem Generatorstator versenkt. In einem nachfolgenden Montageschritt wird die umlaufende Einheit mit dem Läufer auf die Tragstruktur aufgesetzt, wobei die Kopplungsvorrichtung ein erneutes Lösen und Abkoppeln der umlaufenden Einheit ermöglicht. Im Fall eines Anlagenservices wird die umlaufende Einheit mit dem Generatorläufer an die Wasseroberfläche angehoben, während der Generatorstator in der Tragstruktur verbleibt, da diese Anlagekomponente im Wesentlichen als wartungsfrei anzusehen ist.

Die voranstehend dargelegte Ausgestaltung der Erfindung mit einem teilbar ausgebildeten elektrischen Generator wird vorteilhafterweise mit einem gefluteten Luftspalt ausgeführt. Ferner sind die Lagerungskomponenten vorteilhafterweise als wassergeschmierte Gleitlager angelegt, so dass ein Ankoppeln der umlaufenden Einheit mit dem zunächst freiliegenden Läufer des elektrischen Generators unter Wasser gelingt. Ferner sind zur Vereinfachung des Ankoppelns komplementäre Führungselemente an der umlaufende Einheit und der Wasserturbine vorgesehen, die eine Selbstzentrierung bewirken.

Nachfolgend wird die Erfindung anhand von Ausführungsbeispielen im Zusammenhang mit Figurendarstellungen genauer beschrieben. In diesen ist im Einzelnen Folgendes dargestellt:
- Figur 1: zeigt ein erfindungsgemäßes, modular aufgebautes Unterwasserkraftwerk mit einer von der Tragstruktur abgekoppelten Maschinengondel.
- Figur 2: zeigt im Längsschnitt ein Unterwasserkraftwerk für die Ausgestaltungsalternative der Erfindung mit einem teilbaren elektrischen Generator.

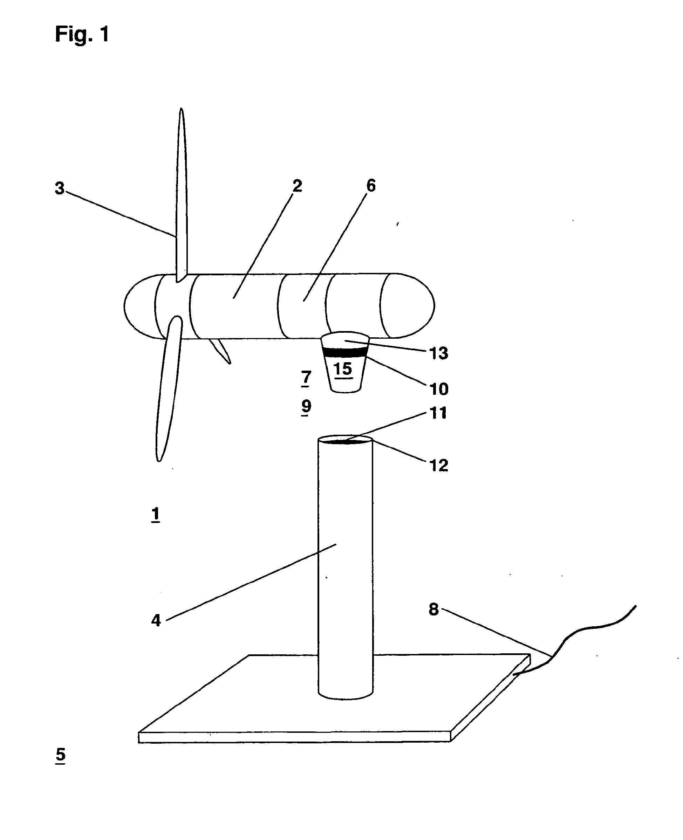

Figur 1 zeigt schematisch vereinfacht ein erfindungsgemäßes Unterwasserkraftwerk. Dieses ist gattungsgemäß modular aufgebaut und weist eine Tragstruktur 4 auf, die vorliegend bis zum Gewässergrund 5 geführt ist. An diese Tragstruktur 4 ist eine Maschinengondel 2 ankoppelbar, die wiederum die Wasserturbine 3 trägt. Für die vorliegende Ausgestaltung ist zusätzlich ein elektrischer Generator 6 in der Maschinengondel 2 aufgenommen. Dieser wird wenigstens mittelbar von der Wasserturbine 3 angetrieben und setzt die aus der Strömung aufgenommene kinetische Energie in elektrische Energie um. Zur Ankopplung der Maschinengondel 2 an der Tragstruktur 4 ist eine Kopplungsvorrichtung 15 vorgesehen. Für die dargestellte beispielhafte Ausgestaltung umfasst diese eine Aufnahme 12 in der Tragstruktur 4 und einen Stutzen 13, der in Verbindung zur Maschinengondel 2 steht. Aufnahme 12 und Stutzen 13 weisen komplementäre Führungselemente 14 in Form konischer Ablaufflächen zur Selbstzentrierung auf. Weitere, im Einzelnen nicht dargestellte Zentrierungs- und Verriegelungsmittel der Kopplungsvorrichtung können zur Realisierung einer lösbaren Verbindung der Maschinengondel 2 mit der Tragstruktur 4 vorgesehen sein.

Erfindungsgemäß weist das modular aufgebaute Unterwasserkraftwerk 1 eine induktive Übertragungseinrichtung 7 auf, die dazu dient, die vom elektrischen Generator 6 erzeugte elektrische Leistung berührungslos von der Maschinengondel 2 auf die Tragstruktur 4 zu übertragen. Hierzu kann die induktive Übertragungsvorrichtung 7 einen Transformator 9 umfassen, dessen Primärseite 10 der Maschinengondel 2 und dessen Sekundärseite 11 der Tragstruktur 4 zugeordnet sind. Dabei kann die induktive Übertragungseinrichtung 7, wie dargestellt, Teil der Kopplungsvorrichtung 15 sein oder in deren Nähe ausgebildet sein. Aufgrund der durch die komplementären Führungselemente 14 bewirkten Selbstzentrierung der Kopplungsvorrichtung 15 können die bei der Kopplung gegeneinander geführten Teilkomponenten des Transformators 9 auf der Primärseite 10 und der Sekundärseite 11 präzise zueinander positioniert werden. Hierdurch ist es möglich, die berührungslos zu überbrückende Distanz zu verringern beziehungsweise zahnartig ineinandergreifende Komponenten für die Primärseite 10 und die Sekundärseite 11 vorzusehen, die den Wirkungsgrad der induktiven Energieübertragung verbessern.

Zur Realisierung einer einfachen Koppelbarkeit ist die induktive Übertragungseinrichtung 7 so ausgeführt, dass deren Komponenten gegenüber dem Umgebungswasser gekapselt sind, der Luftspaltbereich des elektrischen Generators ist nach der Ankopplung geflutet.

Eine mögliche Ausgestaltung für die induktive Übertragungseinrichtung 7, die insbesondere zur Realisierung einer drehbaren Halterung für die Maschinengondel 2 an der Tragstruktur dient, stellt ein Drehtransformator dar. Dieser kann als Asynchronmaschine mit einem bewickelten Läufer ausgeführt sein, der für eine bestimmte Betriebsstellung festgebremst ist. Bevorzugt wird die hierzu verwendete Feststellbremse lösbar ausgebildet, sodass eine Azimutdrehung der Maschinengondel ausgeführt werden kann. Entsprechend bewegt sich für diesen Fall die Primärseite des Drehtransformators gegenüber der an der Tragstruktur feststehenden Sekundärseite beim Nachführen der Maschinengondel.

Für den genannten Drehtransformator ist die Sekundärspannung gegenüber der Primärspannung dem Betrag nach unverändert. Lediglich die Phasenlage ist in Abhängigkeit der Drehstellung veränderlich. Besonders bevorzugt ist der Drehtransformator als Induktionsmaschine mit Läuferspeisung ausgebildet, deren Komponenten gegen die korrosive Wirkung des Umgebungswassers durch ein Korrosionsschutzelement, beispielsweise ein Spaltrohr, oder mittels einer Vergussmasse geschützt sind, sodass ein Betrieb im Umgebungswasser möglich ist.

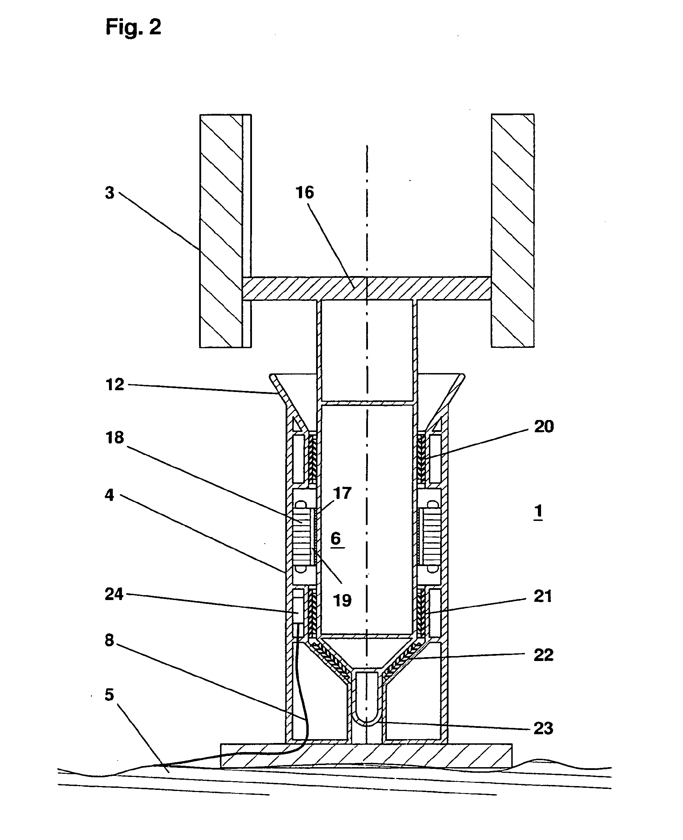

Figur 2 zeigt eine alternative Ausgestaltung der Erfindung, wobei statt einer separaten induktiven Übertragungseinrichtung der elektrische Generator 6 selbst den zu koppelnden Anlagenteil darstellt. Entsprechend zur voranstehend dargelegten Ausführungsform liegt eine berührungslose Kopplung über eine magnetische Wechselwirkung vor. Dabei besteht ein höherer Wirkungsgrad im Vergleich zur voranstehend dargelegten Ausführungsform, allerdings ist für diesen Fall die Kopplung zwischen der Tragstruktur 4 und der umlaufenden Einheit 16 so präzise auszuführen, dass die notwendigen Luftspalttoleranzen im Millimeterbereich für den elektrischen Generator realisierbar sind.

Im Einzelnen zeigt Figur 2 schematisch vereinfacht ein modulares Unterwasserkraftwerk 1, dessen Wasserturbine 3 als Vertikalläufer ausgebildet ist. Dabei trägt der umlaufende Teil 16 neben der Wasserturbine 3 den Generatorläufer 17, der vorteilhafterweise Permanentmagneten umfasst. Der umlaufende Teil trägt ferner die ihm zugeordneten Lagersegmente der Lager 20, 21 und 23. Die Gegenlaufflächen dieser Lager stehen in Verbindung zu der auf dem Gewässergrund 5 fundamentierten Tragstruktur 4. Diese nimmt den Generatorstator 18 auf sowie den Frequenzumrichter 24, von dem aus das Verbindungskabel 8 geschützt bis zum Ablageort am Gewässergrund 5 geführt werden kann.

Bei Kopplung der umlaufenden Einheit 16 mit der Tragstruktur 4 dient eine konisch geformte Aufnahme 12 in der Tragstruktur 4 einer ersten Zentrierung. Ferner ist eine Zentrierungseinrichtung 23 an der umlaufenden Einheit 16 vorgesehen, die in der Endphase der Einkopplung zusammen mit einer komplementär geformten Aufnahme in der Tragstruktur 4 die endgültige Zentrierung bewirkt. Ferner unterstützt das schräg angelegte Lager 22 die Selbstzentrierung, sodass die notwendigen Toleranzen des Luftspalts 19 zwischen dem Generatorläufer 17 und dem Generatorstator 18 eingehalten werden. Bevorzugt sind der Luftspalt 19 sowie die Bereiche, in denen die Lager 20, 21, 22 ausgebildet sind, mit Umgebungswasser geflutet. Gekapselt sind elektrische Komponenten des Frequenzumrichters 24 sowie die elektrisch leitenden Teile des Generators 6.

### Bezugszeichenliste

- 1: Unterwasserkraftwerk
- 2: Maschinengondel
- 3: Wasserturbine
- 4: Tragstruktur
- 5: Gewässergrund
- 6: elektrischer Generator
- 7: induktive Übertragungseinrichtung
- 8: Verbindungskabel
- 9: Transformator
- 10: Primärseite
- 11: Sekundärseite
- 12: Aufnahme
- 13: Stutzen
- 14: komplementäre Führungselemente
- 15: Kopplungsvorrichtung
- 16: umlaufender Teil
- 17: Generatorläufer
- 18: Generatorstator
- 19: Luftspalt
- 20: Lager
- 21: Lager
- 22: Lager
- 23: Zentrierungseinrichtung
- 24: Frequenzumrichter

## Patentansprüche

1. Unterwasserkraftwerk (1), umfassend
1.1 eine Tragstruktur (4);
1.2 eine Maschinengondel (2), wobei die Tragstruktur (4) und die Maschinengondel (2) über eine Kopplungsvorrichtung (15) lösbar miteinander verbindbar sind;
1.3 eine Wasserturbine (3), die einen elektrischen Generator (6) wenigstens mittelbar antreibt, der in der Maschinengondel (2) aufgenommen ist; **dadurch gekennzeichnet, dass**
1.4 das Unterwasserkraftwerk (1) ferner eine induktive Übertragungseinrichtung (7) umfasst, die die vom elektrischen Generator (6) erzeugte Leistung von der Maschinengondel (2) berührungslos zur Tragstruktur (4) überträgt.

2. Unterwasserkraftwerk (1) nach Anspruch 1, **dadurch gekennzeichnet, dass** die induktive Übertragungseinrichtung (7) einen Transformator (9) umfasst, dessen Primärseite (10) mit der Maschinengondel (2) und dessen Sekundärseite (11) mit der Tragstruktur (4) verbunden sind.

3. Unterwasserkraftwerk (1) nach Anspruch 2, **dadurch gekennzeichnet, dass** der Transformator (9) als Drehtransformator ausgeführt ist.

4. Unterwasserkraftwerk (1) nach Anspruch 3, **dadurch gekennzeichnet, dass** der Drehtransformator als Induktionsmaschine mit Läuferspeisung ausgeführt ist, wobei der Läufer die Primärseite (10) des Transformators (9) bildet und nach der Verbindung der Maschinengondel (2) und der Tragstruktur (4) gegenüber dem Stator der Induktionsmaschine festgebremst ist.

5. Unterwasserkraftwerk (1) nach einem der vorausgehenden Ansprüche, **dadurch gekennzeichnet, dass** an der Maschinengondel (2) und der Tragstruktur (4) komplementäre Führungselemente (14) vorgesehen sind, die bei der Verbindung der Maschinengondel (2) und der Tragstruktur (4) eine Selbstzentrierung bewirken.

6. Unterwasserkraftwerk (1) nach Anspruch 5, **dadurch gekennzeichnet, dass** die komplementären Führungselemente (14) einen konisch geformten Stutzen (13) an der Maschinengondel (2) und eine konische Aufnahme (12) an der Tragstruktur (4) umfassen.

7. Unterwasserkraftwerk (1) nach einem der Ansprüche 4 oder 5, **dadurch gekennzeichnet, dass** die induktive Übertragungseinrichtung (7) auf den einander zugewandten Flächen der komplementären Führungselemente (14) ausgebildet ist.

8. Unterwasserkraftwerk nach einem der vorausgehenden Ansprüche, **dadurch gekennzeichnet, dass** sich die Tragstruktur (4) gegen einen Gewässergrund (5) abstützt.

9. Unterwasserkraftwerk (1), umfassend
9.1 eine Tragstruktur (4) zur Abstützung des Unterwasserkraftwerks (1) am Gewässergrund (5);
9.2 eine umlaufende Einheit (16), wobei die Tragstruktur (4) und die umlaufende Einheit (16) über eine im tauchenden Zustand betätigbare Kopplungsvorrichtung (15) lösbar miteinander verbindbar sind;
9.3 eine mit der umlaufenden Einheit (16) wenigstens mittelbar verbundene umlaufende Wasserturbine (3); **dadurch gekennzeichnet, dass**
9.4 der elektrische Generator (6) teilbar ausgebildet ist, wobei der Generatorläufer (17) der Maschinengondel (2) und der Generatorstator (18) der Tragstruktur (4) zugeordnet sind.

## Claims

1. An underwater powerplant (1), comprising
1.1 a support structure (4);
1.2 a nacelle (2), the support structure (4) and the nacelle (2) being detachably connectable to one another via a coupling device (15);
1.3 a water turbine (3), which at least indirectly drives an electrical generator (6), which is received in the nacelle (2);
**characterized in that**
1.4 the underwater powerplant (1) further comprises an inductive transmission device (7), which transmits power generated by the electrical generator (6) from the nacelle (2) in a contactless manner to the support structure (4).

2. The underwater powerplant (1) according to Claim 1, **characterized in that** the inductive transmission device (7) comprises a transformer (9), whose primary side (10) is connected to the nacelle (2) and whose secondary side (11) is connected to the support structure (4).

3. The underwater powerplant (1) according to Claim 2, **characterized in that** the transformer (9) is implemented as a rotary transformer.

4. The underwater powerplant (1) according to Claim 3, **characterized in that** the rotary transformer is implemented as an induction machine having rotor feed, the rotor forming the primary side (10) of the transformer (9) and being fixedly braked in relation to the stator of the induction machine after the connection of the nacelle (2) and the support structure (4).

5. The underwater powerplant (1) according to one of the preceding claims, **characterized in that** complementary guide elements (14) are provided on the nacelle (2) and the support structure (4), which cause self-centering during the connection of the nacelle (2) and the support structure (4).

6. The underwater powerplant (1) according to Claim 5, **characterized in that** the complementary guide elements (14) comprise a conical connecting piece (13) on the nacelle (2) and a conical receptacle (12) on the support structure (4).

7. The underwater powerplant (1) according to one of Claims 4 or 5, **characterized in that** the inductive transmission device (7) is implemented on the surfaces of the complementary guide elements (14) facing toward one another.

8. The underwater powerplant according to one of the preceding claims, **characterized in that** the support structure (4) is supported against a body of water floor (5).

9. An underwater powerplant (1), comprising
9.1 a support structure (4) for supporting the underwater powerplant (1) on the body of water floor (5);
9.2 a revolving unit (16), the support structure (4) and the revolving unit (16) being detachably connectable to one another via a coupling device (15) which can be actuated in the immersed state;
9.3 a revolving water turbine (3), which is at least indirectly connected to the revolving unit (16);
**characterized in that**
9.4 the electrical generator (6) is implemented as separable, the generator rotor (17) being assigned to the nacelle (2) and the generator stator (18) being assigned to the support structure (4).

## Revendications

1. Centrale immergée (1), comprenant
1.1 une structure portante (4);
1.2 une nacelle de machine (2), dans laquelle la structure portante (4) et la nacelle de machine (2) peuvent être connectées l'une à l'autre de manière amovible par le biais d'un dispositif d'accouplement (15);
1.3 une turbine à eau (3), qui entraîne un générateur électrique (6) au moins indirectement, qui est logé dans la nacelle de machine (2); **caractérisée en ce que**
1.4 que la centrale immergée (1) comprend également un système de transmission inductif (7), qui transmet de la nacelle de machine (2) sans contact à la structure portante (4) la puissance produite par le générateur électrique (6).

2. Centrale immergée selon la revendication 1, **caractérisée en ce que** le système de transmission inductif (7) comprend un transformateur (9), dont le côté primaire (10) est connecté à la nacelle de machine (2) et dont le côté secondaire (11) est connecté à la structure portante (4).

3. Centrale immergée (1) selon la revendication 2, **caractérisée en ce que** le transformateur (9) est sous forme de transformateur rotatif.

4. Centrale immergée (1) selon la revendication 3, **caractérisée en ce que** le transformateur rotatif est conçu comme machine à induction avec une alimentation à rotor, où le rotor constitue le côté primaire (10) du transformateur (9) et est freiné brutalement après la connexion de la nacelle de machine (2) et de la structure portante (4) par rapport au stator de la machine à induction.

5. Centrale immergée (1) selon l'une quelconque des revendications précédentes,
**caractérisé en ce que** des éléments de guidage complémentaires (14) sont prévus sur la nacelle de machine (2) et la structure portante (4), qui opèrent un autocentrage lors de la connexion de la nacelle de machine (2) et de la structure portante (4).

6. Centrale immergée (1) selon la revendication 5, **caractérisée en ce que** les éléments de guidage complémentaires (14) comprennent un montant (13) de forme conique sur la nacelle de machine (2) et un réceptacle conique (12) au niveau de la structure portante (4).

7. Centrale immergée (1) selon l'une quelconque des revendications 4 ou 5, **caractérisée en ce que** le système de transmission inductif (7) est constitué sur des faces tournées l'une vers l'autre des éléments de guidage complémentaires (14).

8. Centrale immergée selon l'une quelconque des revendications précédentes, **caractérisé en ce que** la structure portante (4) s'appuie sur le fond de la mer (5).

9. Centrale immergée (1), comprenant
9.1 une structure portante (4) pour soutenir la centrale immergée (1) au fond de la mer (5);
9.2 une unité rotative (16), dans laquelle la structure portante (4) et l'unité rotative (16) peuvent être connectées l'une à l'autre de manière amovible par le biais d'un dispositif d'accouplement (15) pouvant être sollicité en plongée;
9.3 une turbine à eau (3) au moins indirectement connectée à l'unité rotative (16);
**caractérisée en ce que**
9.4 le générateur électrique (6) est conçu de manière divisible, où le rotor de générateur (17) est associé à la nacelle de machine (2) et le stator de générator (18) est associé à la structure portante.
